# EUROPEAN PATENT SPECIFICATION

(11) **EP 2 671 793 B1**
(45) Date of publication and mention of the grant of the patent: **07.03.2018**
(21) Application number: 12709671.7
(22) Date of filing: 31.01.2012
(51) Int. Cl.: B64C 5/02, B64C 3/20, B64C 3/26, B64C 1/06, B64C 3/18

(54) **TORSION BOX FOR AN AIRCRAFT STIFFENED WITH NON-PARALLEL STRINGERS**
MIT NICHT PARALLELEN BÄNDERN VERSTEIFTE HÜLLE EINER TORSIONSBOX FÜR FLUGZEUGE
REVÊTEMENT DE CAISSON DE TORSION POUR AVION RIGIDIFIÉ PAR DES LISSES NON PARALLÈLES

(30) Priority: 31.01.2011 ES 201130123 P
(43) Date of publication of application: 11.12.2013
(73) Proprietor: Airbus Operations, S.L., 28906 Getafe Madrid (ES)
(72) Inventor: CASADO ABARQUERO, Hugo, E-28044 Madrid (ES); HONORATO RUIZ, Francisco Javier, E-28021 Madrid (ES); CRUZ DOMÍNGUEZ, Francisco José, E-28027 Madrid (ES)
(74) Representative: Elzaburu S.L.P.
(86) International application number: PCT/ES2012/070057
(87) International publication number: WO 2012/104463

(56) References cited:
- WO-A2-2009/004364
- FR-A1- 2 390 331
- GB-A- 471 123
- US-A1- 2010 148 008

## Description

### FIELD OF THE INVENTION

The present invention refers to a torsion box skin stiffened with non-parallel stringers of variable cross section and more in particular to a torsion box skin of an horizontal or a vertical tail plane of an aircraft made of a composite material.

### BACKGROUND OF THE INVENTION

The main structure for aircraft lifting surfaces consists of a leading edge, a torsion box, a trailing edge, a root joint and a tip. The torsion box consists of several structural elements: upper and lower skins stiffened by stringers on one side, and spars and ribs on the other side. Typically, the structural elements forming the torsion box are manufactured separately and are joined with the aid of complicated tooling to achieve the necessary tolerances, which are given by the aerodynamic, assembly and structural requirements.

Nowadays, and particularly in the aeronautical industry, composite materials with an organic matrix and continuous fibres, especially CFRP (Carbon Fibre Reinforced Plastic) are widely used in a great variety of structural elements. For example, all the elements which make up a torsion box enumerated beforehand (ribs, stringers, spars and skins) can be manufactured using CFRP.

The skins which make up the torsion boxes are stiffened with span wise longitudinal stringers that improve both the strength and the buckling behaviour of the skins having different cross sections such as "T", "I", "J" or omega-shaped cross sections.

There are several types of distributions for the stringers along the skin, but the most widely used for torsion box skins is the one in which the stringers are parallel to the rear spar and between themselves. This configuration permits the orientation of the stringers along the maximum load direction, as well as an increase in their number in the region with the greatest structural responsibility.

This configuration with parallel stringers, together with the fact that both spars are not parallel to each other, means that while the stringers closest to the rear spar extend along all the skin span, the ones closest to the front spar have a smaller length because they are interrupted by the presence of said spar.

The end of a stringer, both due to the intersection with the front spar or due to any other reasons, is a critical structural feature which must be avoided for two main reasons. Firstly because the load supported by the stringer must be transferred to the skin producing forces and momentums which can trigger the fracture of the physical union between skin and stringer and, as a consequence, can endanger the structural integrity of the lifting surface. Secondly, due to the absence of stringers in a region of the skin, said region must have a greater thickness, both to resist the additional load and to stabilize said region, which means it will be penalized in terms of weight.

This invention is focused on the solution of this problem.

It is also known document US2010/148008 A1 which discloses a torsion box of an aircraft stabilizing surface comprising a front spar, a rear spar, ribs and upper an lower stiffened skins, wherein at least one of the skins is stiffened with a plurality of stringers extending along the skin span.

### SUMMARY OF THE INVENTION

It is an object of the present invention to provide a torsion box of an aircraft stabilizing surface having stiffened skins optimized in weight.

It is another object of the present invention to provide a torsion box of an aircraft stabilizing surface having skins stiffened by a reduced number of stringers.

These and another objects are met by a torsion box for an aircraft stabilizing surface according to claim 1, said box comprising a front spar, a rear spar, ribs and upper and lower stiffened skins, in which at least one of said skins is stiffened with a plurality of stringers each of which extends along the full skin span while having a decreasing cross section towards the skin outer edge. According to the present invention as defined in claim 1, all the stringers have a trace, i.e. are located along the skin span such that the proportions between the skin chord and the chord-wise distances between the trace, i.e. the location trace- of each stringer and the front and rear spars remain substantially constant. Therefore the distribution of stringers over the skin is a "conical" distribution -in opposition to the "parallel" distribution of the prior art- that, together with the decreasing cross section towards the skin outer edge, allows a reduction in the number of stringers required that contributes to a weight optimization.

Preferred embodiments of the invention are disclosed in the dependent claims.

In embodiments of the present invention, the number of said stringers is defined as the number of stringers that, having a predetermined minimum cross section, can be placed in the skin outer edge. The number of stringers is therefore dependent on the selected stringer geometry and its minimum cross section from the stiffening requirements, allowing thus different choices if this can be convenient taking into account design and/or manufacturing constraints.

In preferred embodiments of the present invention, said stringers are omega-shaped stringers due to the stiffening properties of the omega-shaped stringers. However T-shaped stringers, I-shaped stringers or J-shaped stringers are also suitable stringers for this invention.

In preferred embodiments of the present invention, the stabilizing surface is a horizontal tail plane or a vertical tail plane.

In preferred embodiments of the present invention said skin and said stringers are made of a composite material, particularly CFRP.

Other characteristics and advantages of the present invention will be clear from the following detailed description of embodiments illustrative of its object in relation to the attached figures.

### DESCRIPTION OF THE FIGURES

Figure 1 shows the typical structural configuration of a torsion box, except for the upper skin, which has been removed to improve the visibility of the interior.
Figure 2 shows a portion of an skin of a typical torsion box where several stringers end close to the front spar.
Figure 3 shows a schematic plan view of a skin of a torsion box stiffened with variable section stringers distributed "conically" according to the present invention.
Figure 4 shows an isometric view a of a torsion box skin stiffened with variable section omega-shaped stringers distributed "conically" according to the present invention.
Figures 5a and 5b show, respectively, the omega cross sections of a stringer according to the present invention in the inner and outer torsion box edges.
Figure 6 shows a skin of a torsion box stiffened with parallel omega-shaped stringers highlighting the skin regions without stringer support.

### DETAILED DESCRIPTION OF THE INVENTION

In the following detailed description of the invention we will mainly refer to a torsion box of an aircraft horizontal tail plane made of CFRP. A horizontal tail plane is basically made up of two torsion boxes joined together along the aircraft's symmetry plane (two lateral torsion boxes configuration) or along an interface with the fuselage (central torsion box and lateral torsion box configuration).

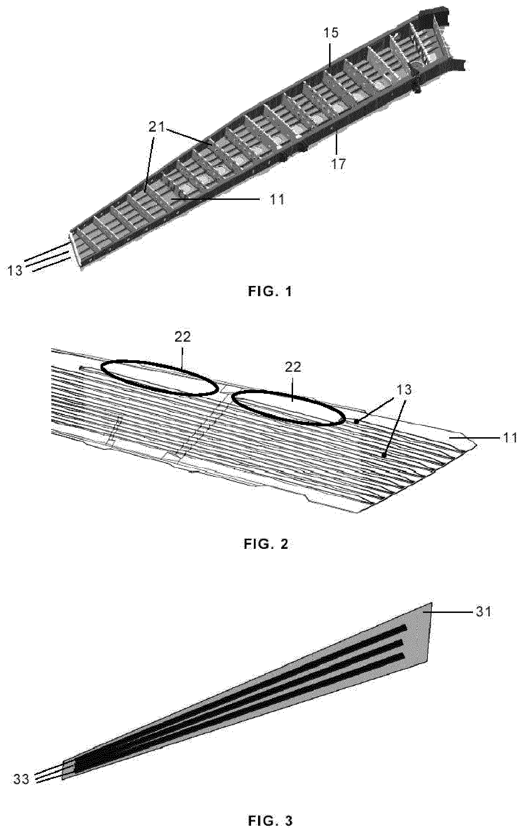

Figure 1 shows a typical torsion box made up by an upper skin (not shown to facilitate the identification of the different parts), a lower skin 11 reinforced with longitudinal stringers 13, a front spar 15, a rear spar 17 and ribs 21.

Figure 2 shows a portion of a skin 11 stiffened with T-shaped stringers 13 parallel to the rear spar 17 having regions 22 without stringer support because the stringers closest to the front spar 15 are interrupted by said front spar 15.

According to the present invention, as shown in Figure 3, the skin 31 of a horizontal tail plane torsion box is stiffened by a plurality of stringers 33 each of which extends along the skin full span in a "conical" distribution (as defined before).

The benefits associated to this invention are related to:
- A decrease in the number of stringers required to optimize the skin in terms of weight.
- A minimization of the size of those skin regions without stringer support so that their thickness would not have to be increased.
- The fact that none of the stringers is interrupted by the front spar avoiding the problematic structural feature shown in Figure 2.

To a lesser degree, there are other benefits related to the possibility of reducing the number of ribs 21 needed in the region of the structure away from the union of the torsion boxes, due to the increase of the spacing between said ribs 21 due to the improved global behaviour of the structure when the size of the torsion box is reduced and the number of stringers is maintained. This fact also means a reduction of the weight and cost of the horizontal tail plane; as well as maximizing the possible integration of the skin with other elements during the manufacturing process.

Due to the scarce space existing in the edge of the torsion box farthest away from the symmetry plane of the aircraft, the maximum number of stringers which could be placed in this region may be not enough to reinforce the region where the torsion boxes are joined, so this region's thickness would have to be increased, impacting the weight of the structure. Because of this, it is necessary that, along with the "conical" distribution of the stringers, the stringers cross section must be variable, being smaller at the outer edge of the torsion box to define the maximum number of stringers possible, and bigger in the region with the highest structural responsibility to resist the loads of this region and support a greater panel surface, compensating the smaller number of stringers and avoiding the need to increase the thickness of said region. Depending on the shape of the cross section of the stringer used, the number of stringers necessary to optimize the weight of the skins varies, being less the bigger the inertia provided by each stringer or the bigger the portion of skin which must be supported and stabilized by said element.

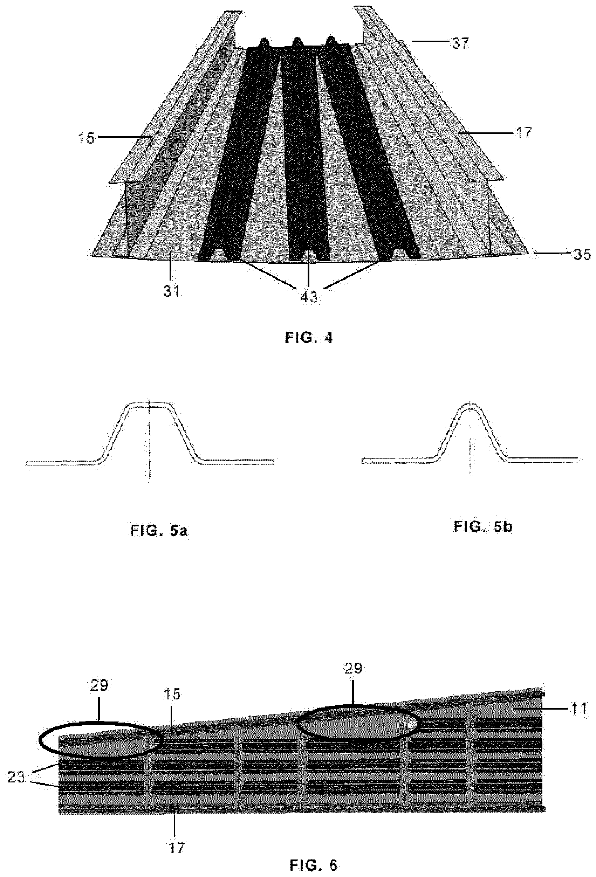

In a preferred embodiment illustrated in Figure 4 the stringers are omega-shaped stringers 43. Two possible omega cross sections, corresponding to the skin inner and outer edges 35, 37, are shown in Figures 5a and 5b.

Omega-shaped stringers have a high inertia and can provide support and stability to a great skin panel due to its geometry. These characteristics, along with the advantages it presents for its manufacture, due to the simplification and reduction of the tooling, and therefore of cost, make its use in the reinforcement of skins, both for torsion boxes and fuselages very interesting.

While omega-shaped stringers have been widely used in fuselages in the past few years, they have not been used in torsion boxes due to their inefficiency in terms of weight. This is because the combination of this type of stringers with the prior art parallel distribution involves, as can be seen in Figure 6, great skin regions 29 without support where the stringers 23 meet the front spar 15 due to its geometry compared with, for instance, T-shaped stringers. The thickness of these regions 29 must be increased for the reasons already mentioned, which increases the weight of the structure.

However these drawbacks are not present in a torsion box according to the present invention. On the contrary as a consequence of the use of an omega cross section and the reduction of the number of stringers, both the skin weight and its manufacturing cost, which are directly related to the cross section and the number of stringers, are reduced.

In another embodiments T, I or J-shaped stringers can be used being the number of stringers required greater than when using omega-shaped stringers and therefore lessening to a certain extent the benefits in terms of weight and cost although maintaining the benefits related to the elimination of the stringer endings close to the front spar.

The invention is applicable to any torsion box for aircraft stabilizing surfaces and preferably to horizontal or vertical tail plane torsion boxes.

Although the present invention has been fully described in connection with preferred embodiments, it is evident that modifications may be introduced within the scope thereof, not considering this as limited by these embodiments, but by the contents of the following claims.

## Claims

1. Torsion box for an aircraft stabilizing surface, said torsion box comprising a front spar (15), a rear spar (17), ribs (21) and upper and lower stiffened skins, wherein at least one of said skins (31) is stiffened with a plurality of stringers (33, 43) each of which extends along the skin span, **characterized in that** said plurality of stringers (33, 43) extends along the full skin span while having a decreasing cross section towards the skin outer edge (37) and **in that** all the stringers (33, 43) are located along the skin span such that the proportions between the skin chord and the chord-wise distances between the location of each stringer (33, 43) and the front (15) and rear (17) spars remain substantially constant.

2. Torsion box for an aircraft stabilizing surface according to claim 1, wherein the number of said stringers (33, 43) is defined as the number of stringers that, having a predetermined minimum cross section, can be placed in the skin outer edge (37).

3. Torsion box for an aircraft stabilizing surface according to any of claims 1-2, wherein said stringers (43) are omega-shaped stringers.

4. Torsion box for an aircraft stabilizing surface according to any of claims 1-2, wherein said stringers (33) are one of the following:
- T-shaped stringers;
- I-shaped stringers;
- J-shaped stringers.

5. Torsion box for an aircraft stabilizing surface according to any of claims 1-4, wherein said stabilizing surface is a horizontal tail plane.

6. Torsion box for an aircraft stabilizing surface according to any of claims 1-4, wherein said stabilizing surface is a vertical tail plane.

7. Torsion box for an aircraft stabilizing surface according to any of claims 1-6, wherein said skin (31) and said stringers (33, 43) are made of a composite material.

## Patentansprüche

1. Eine Torsionsbox für eine Flugzeug-Stabilisierungsfläche, wobei die genannte Torsionsbox einen vorderen Holm (*spar*) (15) einen hinteren Holm (17), Rippen (21) und obere und untere versteifte Häute umfasst, wobei mindestens eine der genannten Häute (31) mit einer Vielzahl an Stringern (*stringers*) (33, 43) versteift wird, die jeweils entlang der Hautspannweite (*skin span*) verlaufen, **dadurch gekennzeichnet, dass** die genannte Vielzahl an Stringern (33, 43) entlang der gesamten Hautspannweite verläuft, wobei sich deren Querschnitt in Richtung der Haut-Außenkante (37) verringert und dadurch, dass sich alle Stringer (33, 43) entlang der Hautspannweite befinden, sodass die Proportionen zwischen der Hautsehne (*skin chord*) und den Sehnen-mäßigen Abständen zwischen der Position eines jeden Stringers (33, 43) und den Holmen vorne (15) und hinten (17) im Wesentlichen konstant bleiben.

2. Die Torsionsbox für eine Flugzeug-Stabilisierungsfläche nach Anspruch 1, wobei die Anzahl der genannten Stringer (33, 43) als die Anzahl an Stringern definiert wird, die, bei einem vorbestimmen Mindestquerschnitt, in der Haut-Außenkante (37) platziert werden können.

3. Die Torsionsbox für eine Flugzeug-Stabilisierungsfläche nach irgendeinem der Ansprüche 1-2, wobei die genannten Stringer (43) Omega-förmige Stringer sind.

4. Die Torsionsbox für eine Flugzeug-Stabilisierungsfläche nach irgendeinem der Ansprüche 1-2, wobei die genannten Stringer (33) einer unter den Folgenden sind:
- T-förmige Stringer;
- I-förmige Stringer;
- J-förmige Stringer.

5. Die Torsionsbox für eine Flugzeug-Stabilisierungsfläche nach irgendeinem der Ansprüche 1-4, wobei die genannte Stabilisierungsfläche ein horizontales Höhenleitwerk (*horizontal tail plane*) ist.

6. Die Torsionsbox für eine Flugzeug-Stabilisierungsfläche nach irgendeinem der Ansprüche 1-4, wobei die genannte Stabilisierungsfläche ein vertikales Seitenleitwerk (*vertical tail plane*) ist.

7. Die Torsionsbox für eine Flugzeug-Stabilisierungsfläche nach irgendeinem der Ansprüche 1-6, wobei die genannte Haut (31) und die genannten Stringer (33, 43) aus einem Verbundmaterial hergestellt werden.

## Revendications

1. Caisson de torsion pour surface de stabilisation d'avion, ledit caisson de torsion comprenant un longeron avant (15), un longeron arrière (17), des nervures (21) et des revêtements rigidifiés supérieur et inférieur, dans lequel au moins l'un desdits revêtements (31) est rigidifié par une pluralité de lisses (33, 43) qui s'étendent toutes le long de la longueur du revêtement, **caractérisé en ce que** ladite pluralité de lisses (33, 43) s'étend le long de la longueur entière du revêtement tout en présentant une section décroissante vers le bord extérieur (37) du revêtement, et **en ce que** toutes les lisses (33, 43) sont positionnées le long de la longueur du revêtement de manière telle que les proportions entre la corde du revêtement et les distances dans le sens de la corde qui séparent l'emplacement de chaque lisse (33, 43) des longerons avant (15) et arrière (17) restent substantiellement constantes.

2. Caisson de torsion pour surface de stabilisation d'avion selon la revendication 1, dans lequel le nombre desdites lisses (33, 43) est défini comme le nombre de lisses qui, ayant une section minimale prédéterminée, peuvent être placées dans le bord extérieur de revêtement (37).

3. Caisson de torsion pour surface de stabilisation d'avion selon l'une quelconque des revendications 1 à 2, dans lequel lesdites lisses (43) sont des lisses en forme d'oméga.

4. Caisson de torsion pour surface de stabilisation d'avion selon l'une quelconque des revendications 1 à 2, dans lequel lesdites lisses (33) sont d'un des types suivants :
- des lisses en forme de T ;
- des lisses en forme de I ;
- des lisses en forme de J.

5. Caisson de torsion pour surface de stabilisation d'avion selon l'une quelconque des revendications 1 à 4, dans lequel ladite surface de stabilisation est un plan de queue horizontal.

6. Caisson de torsion pour surface de stabilisation d'avion selon l'une quelconque des revendications 1 à 4, dans lequel ladite surface de stabilisation est un plan de queue vertical.

7. Caisson de torsion pour surface de stabilisation d'avion selon l'une quelconque des revendications 1 à 6, dans lequel ledit revêtement (31) et lesdites lisses (33, 43) sont faits d'un matériau composite.
